# EUROPÄISCHE PATENTSCHRIFT

(11) **EP 4 487 530 B1**
(45) Veröffentlichungstag und Bekanntmachung des Hinweises auf die Patenterteilung: **20.08.2025**
(21) Anmeldenummer: 24725172.1
(22) Anmeldetag: 08.05.2024
(51) Int. Cl.: H04L 9/40, H04W 12/088

(54) **KOMMUNIKATIONSSYSTEM UND FAHRZEUG**
COMMUNICATION SYSTEM AND VEHICLE
SYSTÈME DE COMMUNICATION ET VÉHICULE

(30) Priorität: 15.05.2023 DE 102023001972
(43) Veröffentlichungstag der Anmeldung: 08.01.2025
(73) Patentinhaber: Mercedes-Benz Group AG, 70372 Stuttgart (DE)
(72) Erfinder: THOMER, Daniel, 70178 Stuttgart (DE); HENLE, Manuel, 71154 Nufringen (DE); MEHLER, Valeska, 70435 Stuttgart (DE)
(74) Vertreter: Novagraaf Group
(86) Internationale Anmeldenummer: PCT/EP2024/062738
(87) Internationale Veröffentlichungsnummer: WO 2024/235789

(56) Entgegenhaltungen:
- DE-A1- 102021 207 870
- IT-A1- 201800 021 550
- US-A1- 2021 127 268

## Beschreibung

Die Erfindung betrifft ein Kommunikationssystem nach der im Oberbegriff von Anspruch 1 näher definierten Art sowie ein Fahrzeug.

Moderne Fahrzeuge verfügen über die unterschiedlichsten Recheneinheiten, wie Steuergeräte, einen zentralen Bordcomputer, eine Telekommunikationseinheit und dergleichen. Diese Recheneinheiten kommunizieren sowohl untereinander, als auch mit fahrzeugexternen Systemen. Die Kommunikation kann kabelgebunden oder auch drahtlos erfolgen. Insbesondere die Anbindung fahrzeuginterner Recheneinheiten an fahrzeugexterne Systeme bietet Angreifern ein Einfallstor für die Manipulation von Fahrzeugkomponenten. Um das Einschleusen von Schadcode auf die Recheneinheiten im Fahrzeug zu verhindern, sind entsprechende Sicherheitsmaßnahmen zu treffen.

Eine bewährte und zuverlässige Methode zum Kontrollieren der zwischen zwei Recheneinheiten ausgetauschten Informationen, ist der Einsatz sogenannter Firewalls. Bei einer Firewall handelt es sich um ein Sicherungssystem, umfassend festgelegte Regeln, anhand derer bestimmt wird, welche Informationspakete zwischen den Recheneinheiten ausgetauscht werden dürfen und welche nicht. Hierdurch lassen sich unerlaubte Zugriffe unterbinden. Eine Firewall kann als eine auf einer Hardwarekomponente ausgeführte Softwarekomponente implementiert sein.

Da sich die Technik und somit auch die Angriffsstrategie und der Schadcode von Angreifern beständig weiterentwickelt, sind die verwendenden IT-Sicherheitstechnologien daran anzupassen. Wird ein Fahrzeug neu produziert, können die aktuellen Sicherheitsanforderungen bereits in der Produktion erfüllt werden. Das Aktualisieren von Software von sich im Einsatz befindlichen Fahrzeugen ist mittels drahtloser Updates oder auch kabelgebunden, beispielsweise bei einem Werkstattbesuch, möglich. Das Anpassen älterer Fahrzeuge an die aktuellen Sicherheitsanforderungen ist jedoch schwieriger, insbesondere wenn besagte Fahrzeuge über keine geeignete Update-Schnittstelle verfügen. Insbesondere muss das Anpassen der Recheneinheiten im Fahrzeug im vertretbaren Rahmen bleiben, das heißt, dass sich das Anpassen der Recheneinheiten im Fahrzeug auf möglichst wenige Recheneinheiten beschränken sollte. Trotzdem muss dabei gewährleistet werden, dass sämtliche Recheneinheiten zuverlässig gegen Angriffe gesichert werden.

Aus der US 2020/0272735 A1 sind eine Vorrichtung zur Absicherung von Diagnosebefehlen an ein Steuergerät eines Fahrzeugs und ein entsprechendes Fahrzeug bekannt. Die Druckschrift beschreibt den Einsatz einer Firewall zum Filtern der zwischen einem Steuergerät und einem Diagnosetester ausgetauschten Informationen. Das Filtern der dabei auszutauschenden Informationen erfolgt in Abhängigkeit der Zustände der im Fahrzeug verbauten Hardware sowie der darauf laufenden Software. So lassen sich beispielsweise Diagnosebefehle nur ausschließlich an bestimmte Steuergeräte weiterleiten, nur eine Auswahl ganz bestimmter Diagnosebefehle weiterleiten, das Schreiben auf bestimmte Speicheradressen eines Steuergeräts verhindern, Diagnosebefehle unterdrücken, wenn sie über einer festgelegten Häufigkeit ausgegeben werden, oder Diagnosebefehle ausschließlich dann ausführen, wenn das Fahrzeug in einem bestimmten Zustand ist, wie beispielsweise wenn das Fahrzeug steht.

Ferner offenbart die DE 10 2021 207 870 A1 ein Verfahren und eine Recheneinheit zum Verwalten von Diagnoseanfragen in einem Netzwerk. Dabei ist eine Recheneinheit mit einer Firewall-Funktionalität in ein fahrzeuginternes Kommunikationsnetz zwischen die im Fahrzeug verbauten Steuergeräte und externe Kommunikationsschnittstellen geschaltet. Über die externen Kommunikationsschnittstellen lassen sich Diagnosetester mit dem Kommunikationsnetz verbinden. Die Recheneinheit umfasst eine Konfigurationsdatei die in Abhängigkeit einer von der Recheneinheit empfangenen Diagnoseanfrage und einem aktiven Betriebsmodus der an die Recheneinheit angebundenen Steuergeräte festlegt, welche Diagnosenachrichten zwischen dem Diagnosetester und den Steuergeräten ausgetauscht werden dürfen und welche nicht.

Zudem offenbart die US 2013/0081106 A1 ein Sicherheitsgerät und ein Sicherheitssystem zur Überwachung des Verkehrs in einem Datenbus. Das Sicherheitsgerät ist im Datenbus zwischen einen Anschluss für eine Werkzeug-Recheneinheit und Steuergeräte geschaltet. Das Sicherheitsgerät regelt den Datenverkehr zwischen der Werkzeug-Recheneinheit und den Steuergeräten. Dabei kann das Sicherheitsgerät die Adresse eines Steuergeräts in eine Antwortnachricht an die Werkzeug-Recheneinheit einfügen.

Der vorliegenden Erfindung liegt die Aufgabe zugrunde ein verbessertes Kommunikationssystem anzugeben.

Erfindungsgemäß wird diese Aufgabe durch ein Kommunikationssystem mit den Merkmalen des Anspruchs 1 gelöst. Vorteilhafte Ausgestaltungen und Weiterbildungen sowie ein Fahrzeug, umfassend Teile des Kommunikationssystems, ergeben sich aus den hiervon abhängigen Ansprüchen.

Ein gattungsgemäßes Kommunikationssystem, umfassend eine fahrzeugexterne Ansprech-Einheit, wenigstens ein fahrzeuginternes Steuergerät und eine in eine Kommunikationsleitung zwischen die Ansprech-Einheit und das wenigstens eine Steuergerät zwischengeschaltete fahrzeuginterne Verwaltungs-Einheit, wobei die Verwaltungs-Einheit eine Firewall-Funktionalität zum selektiven Hindurchlassen oder Sperren von zwischen der Ansprech-Einheit und dem wenigstens einen Steuergerät austauschbaren Nachrichten bereitstellt, wird erfindungsgemäß dadurch weitergebildet, dass die Verwaltungs-Einheit über wenigstens zwei Betriebsmodi verfügt, wobei in jedem Betriebsmodus eine unterschiedliche Gesamtheit hindurchzulassender und zu sperrender Nachrichten vorgegeben ist, und wobei die Verwaltungs-Einheit dazu eingerichtet ist, einen der Betriebsmodi in Abhängigkeit einer an eine Nachricht von der Ansprech-Einheit oder dem wenigstens einen Steuergerät angehängten Betriebsmodus-Wahlinformation zu aktivieren.

Je nach Situation ist es erforderlich eine Kommunikation zwischen Ansprech-Einheit und Steuergerät zuzulassen oder zu blockieren. Bei der Ansprech-Einheit handelt es sich um eine beliebige fahrzeugexterne Recheneinheit. Beispielsweise kann es sich um einen Laptop, einen Tabletcomputer, einen Desktopcomputer oder dergleichen handeln. Die Ansprech-Einheit ermöglicht es also beispielsweise einem Entwickler, einem Werker in der Fertigung des Fahrzeugs oder einem Mechaniker während der Wartung des Fahrzeugs die Steuergeräte des Fahrzeugs anzusprechen. Entsprechend ist Zugriff auf die Steuergeräte zu gewähren. Die Ansprech-Einheit kann jedoch auch von einem Angreifer wie einem Hacker genutzt werden, um die Steuergeräte des Fahrzeugs zu manipulieren. In diesem Falle ist die Kommunikation zwischen der Ansprech-Einheit und den Steuergeräten einzuschränken.

Eine besonders effiziente, da schnelle und Rechenaufwand sparende Methode zum Blockieren bzw. freigeben des Informationsflusses zwischen der Ansprech-Einheit und den fahrzeuginternen Steuergeräten ist mittels des erfindungsgemäßen Kommunikationssystems gewährleistet. So verfügt die Verwaltungs-Einheit über wenigstens zwei Betriebsmodi, die jeweils eine unterschiedliche Gesamtmenge an Nachrichten beschreiben, die im entsprechenden Betriebsmodus hindurchgelassen oder gesperrt werden sollen. Die über die Kommunikationsleitung austauschbaren Nachrichten lassen sich dabei verschiedenen Nachrichtentypen zuordnen. Unterschiedliche Nachrichtentypen zeichnen sich durch einen bestimmten Inhalt und/oder eine bestimmte Zieladresse aus. Beispielsweise kann es sich um Befehle handeln, die ein Steuergerät zum Durchführen bzw. Bereitstellen eines Dienstes oder Services anleiten. Als Antwort kann ein Steuergerät dann beispielsweise Informationen liefern. Eine Nachricht kann auch eine Softwareaktualisierung, also neu einzubringende oder zu ändernde Codebestandteile einer von einem Steuergerät ausführbaren Software enthalten. Jeder Betriebsmodus der Verwaltungs-Einheit definiert dabei, welche Nachrichten welchen Typs durchgelassen bzw. gesperrt werden. Somit ist es nicht mehr erforderlich Zustandsinformationen zwischen den einzelnen Steuergeräten und der Verwaltungs-Einheit auszutauschen, was den Rechenaufwand vermindert und Latenzzeiten reduziert. Dies erhöht auch die Cybersicherheit, da weniger Zugriffe auf die Steuergeräte erfolgen. So sind nämlich Recheneinheiten während der Verarbeitung von Aufgaben besonders anfällig für Angriffe, wie beispielsweise *Voltage Glitching.*

Die Betriebsmodus-Wahlinformation wird dabei mit der Nachricht selbst mit verschickt. Dies vereinfacht den Ablauf zur Entscheidungsfindung, welche Nachrichten hindurchgelassen werden sollen und welche Nachrichten gesperrt werden sollen, noch weiter. So muss auch die Ansprech-Einheit nicht erst eine separate Kommunikation zur Verwaltungs-Einheit aufbauen und die Verwaltungs-Einheit separat konfigurieren. Die Betriebsmodus-Wahlinformation kann dabei die gesamte Nachricht oder auch nur Teile davon ausbilden. Insbesondere umfasst die Nachricht einen Kopfteil und eine Nutzteil, auch als *Header* und *Payload* bezeichnet, wobei der Kopfteil zur Verarbeitung der Nachricht relevante Informationen, wie beispielsweise eine Zieladresse, einen Nachrichtentyp, einen Aufgabentyp oder dergleichen umfasst und die Nutzlast den relevanten Teil der zu übermittelnden Daten enthält.

Die Betriebsmodus-Wahlinformation ist auch von den Steuergeräten ausgebbar, wodurch auch die Steuergeräte des Fahrzeugs den Betriebsmodus der Verwaltungs-Einheit wechseln können.

Die Verwaltungs-Einheit ist in die Kommunikationsleitung zwischen die Ansprech-Einheit und die fahrzeuginternen Steuergeräte zwischengeschaltet. Somit ist es nicht erforderlich sämtliche Steuergeräte des Fahrzeugs anzupassen, um die IT-Sicherheit zu verbessern. Eine solche zentrale Verwaltung des Kommunikationsverkehrs lässt sich entsprechend einfach und kostengünstig in ein Fahrzeug implementieren.

Bei der Verwaltungs-Einheit kann es sich um dedizierte Hardware handeln, also beispielsweise eine separate Recheneinheit. Die Firewall-Funktionalität kann durch eine auf der Verwaltungs-Einheit laufende Software ausgebildet sein. Die Verwaltungs-Einheit selbst kann jedoch auch durch Software ausgebildet sein und somit in ein Rechnersystem eingebettet sein, beispielsweise als virtuelle Maschine.

Eine vorteilhafte Ausgestaltung des Kommunikationssystems sieht vor, dass eine über die Kommunikationsleitung erfolgende Kommunikation auf dem durch die ISO 14229 definierten UDS-Protokoll basiert. UDS steht für *Unified Diagnostic Services,* auch als allgemeine Fahrzeugdiagnose bezeichnet. Die Ansprech-Einheit wird in diesem Zusammenhang oftmals auch als Tester oder Diagnosetester bezeichnet. Die zwischen der Ansprech-Einheit und den Steuergeräten stattfindende Kommunikation basiert dann auf dem sogenannten Request-Response Prinzip, auch als (An-)Frage-Antwort Prinzip bezeichnet. Das erfindungsgemäße Kommunikationssystem erlaubt somit eine effiziente und sichere Absicherung auch weit verbreiteter zur Fahrzeugdiagnose verwendeter Protokolle.

Bei den zwischen der Ansprech-Einheit und den Steuergeräten ausgetauschten Nachrichten handelt es sich in diesem Falle um dem entsprechenden Diagnoseprotokoll zugrunde liegenden Diagnosebotschaften bzw. Diagnosebefehlen. Bei der Verwaltungs-Einheit kann es sich um ein zentrales Gateway im Fahrzeug handeln, welches über einzelne Bussysteme, insbesondere einen oder mehrere CAN-Busse, an die Steuergeräte des Fahrzeugs angeschlossen ist. Der die Ansprech-Einheit mit der Verwaltungs-Einheit verbindende Strang der Kommunikationsleitung wird dann auch als Diagnosebus bezeichnet. Der Nachrichtentyp kann dann durch den UDS-Dienst beschrieben werden. Eine Unterscheidung ist mittel der sogenannten SID möglich.

Entsprechend einer weiteren vorteilhaften Ausgestaltung des erfindungsgemäßen Kommunikationssystems ist die Betriebsmodus-Wahlinformation kryptografisch abgesichert an eine respektive Nachricht angehängt. Hierzu kommen alle gängigen kryptografischen Methoden infrage, wie das Durchführen von Signaturverfahren, Kontrollieren von Zertifikaten, Durchführen einer sogenannten Challenge-Response-Authentifizierung und dergleichen. Solche kryptografischen Sicherungsmethoden basieren oftmals auf dem Austauschen öffentlicher und privater Schlüssel sowie Berechnung von Geheimnissen mit Hilfe von Hashfunktionen. Hierdurch lässt sich die Sicherheit der Kommunikation zwischen den Bestandteilen des Kommunikationssystems noch weiter verbessern. So sind insbesondere ausschließlich autorisierte Recheneinheiten dazu in der Lage entsprechende Nachrichten zu generieren, die auch tatsächlich einen Betriebsmoduswechsel bewirken können. Die Verwaltungs-Einheit prüft die Authentizität einer entsprechenden Nachricht bzw. der Betriebsmodus-Wahlinformationen mit Hilfe der im Vorigen erwähnten kryptografischen Methoden und wechselt nur dann den Betriebsmodus, wenn auch bestätigt wird, dass die Nachricht von einer autorisierten Quelle stammt.

Dabei kann es vorgesehen sein, dass zur Aktivierung einiger bestimmter nichtsicherheitsrelevanter Betriebsmodi auch Nachrichten mit unverschlüsselten bzw. kryptografisch ungeschützten Betriebsmodus-Wahlinformationen akzeptiert werden. Dies ist beispielsweise der Fall, wenn lediglich eine Information von einem Steuergerät ausgelesen werden soll.

Eine weitere vorteilhafte Ausgestaltung des erfindungsgemäßen Kommunikationssystems sieht ferner vor, dass die Verwaltungs-Einheit dazu eingerichtet ist, automatisch einen ersten Betriebsmodus zu aktivieren, nach Erhalt einer eine Betriebsmodus-Wahlinformation umfassenden Nachricht den durch die Betriebsmodus-Wahlinformation angegebenen Betriebsmodus zu aktivieren und nach Verarbeiten zumindest der Nachricht automatisch erneut den ersten Betriebsmodus zu aktivieren. Mit anderen Worten entspricht der erste Betriebsmodus einer Art Standardbetriebsmodus, welcher somit für die meiste Zeit aktiviert ist. Entsprechend werden Nachrichten der dem ersten Betriebsmodus zugrundeliegenden Regeln hindurchgelassen bzw. gesperrt. Lediglich wenn ganz bestimmte, bspw. sicherheitsrelevante Nachrichten hindurchzulassen sind, sind diese dank der angehängten Betriebsmodus-Wahlinformation dazu in der Lage, die Verwaltungs-Einheit umzuschalten, sodass temporär zum Hindurchlassen der jeweiligen Nachricht ein abweichender Betriebsmodus aktiviert wird. Danach schaltet die Verwaltungs-Einheit zurück in den ersten Betriebsmodus. Eine entsprechende Nachricht kann der Verwaltungs-Einheit dabei auch vorgeben, dass nicht nur die jeweilige Nachricht selbst hindurchgelassen wird, sondern beispielsweise die nächsten x folgenden Nachrichten. Als "Verarbeiten der Nachricht" wird in diesem Zusammenhang das Weiterleiten bzw. Sperren durch die Verwaltungs-Einheit verstanden.

Bevorzugt ist dabei im ersten Betriebsmodus das Weiterleiten von sämtlichen Nachrichten gesperrt. Hierdurch lässt sich die Cybersicherheit des erfindungsgemäßen Kommunikationssystems noch weiter verbessern. So blockiert generell die Verwaltungs-Einheit den Austausch von Nachrichten zwischen der Ansprech-Einheit und den fahrzeuginternen Steuergeräten. Nur autorisierte Nachrichten, also Nachrichten, die eine geeignete Betriebsmodus-Wahlinformation, bevorzugt eine kryptografisch abgesicherte Betriebsmodus-Wahlinformation, umfassen, sind somit weiterleitbar.

Eine weitere vorteilhafte Ausgestaltung des erfindungsgemäßen Kommunikationssystems sieht ferner vor, dass die Verwaltungs-Einheit über eine Überwachungsschnittstelle verfügt und dazu eingerichtet ist, Betriebsinformationen über die Überwachungsschnittstelle bereitzustellen, wobei die Betriebsinformationen das Betriebsverhalten der Verwaltungs-Einheit beschreiben. Hierdurch sind Nutzer dazu in der Lage das Verhalten der Verwaltungs-Einheit bzw. der respektiven Firewall-Funktionalität nachzuvollziehen. Somit können beispielsweise Entwickler nachvollziehen, aus welchen Gründen eine Nachricht nicht weitergeleitet wurde, obwohl dies eigentlich der Fall sein sollte. Besonders vorteilhaft werden die Betriebsinformationen von einem sogenannten Watchdog ausgelesen. Bei einem Watchdog handelt es sich um eine Funktion zur Ausfallerkennung eines digitalen Systems. Entsprechend kann der Watchdog geeignete Maßnahmen einleiten, um im Falle einer Fehlfunktion den Betrieb des Kommunikationssystems aufrecht zu erhalten. Beispielsweise können einzelne Komponenten des Kommunikationssystems resettet bzw. neu gestartet werden.

Entsprechend einer weiteren vorteilhaften Ausgestaltung des erfindungsgemäßen Kommunikationssystems ist eine der Verwaltungs-Einheit in Abhängigkeit eines jeweiligen Betriebsmodus zugrundeliegender Entscheidungslogik zum Entscheiden, welche Nachrichten gesperrt und hindurchgelassen werden sollen, in Form eines Entscheidungsbaums definiert. Dies ermöglicht das schnelle und einfache Nachvollziehen des Entscheidungsverhaltens der Verwaltungs-Einheit. Die verschiedenen Stufen des Entscheidungsbaums unterteilen sich dabei in Abhängigkeit des Nachrichtentyps. In der obersten Schicht des Entscheidungsbaums wird dann beispielsweise geprüft welche SID eine entsprechende Nachricht aufweist, woraufhin Nachrichten mit ganz bestimmten SIDs hindurchgelassen werden, Nachrichten mit anderen SIDs gesperrt werden und Nachrichten mit wiederum anderen SIDs in den tieferen Schichten des Entscheidungsbaums geprüft werden. In den tieferen Schichten des Entscheidungsbaums können dann mehrere SIDs zu Gruppen zusammengefasst werden, sodass beispielsweise Nachrichten an ganz bestimmte Zieladressen gesperrt bzw. hindurchgelassen werden.

Eine weitere vorteilhafte Ausgestaltung des erfindungsgemäßen Kommunikationssystems sieht ferner vor, dass die Verwaltungs-Einheit dazu eingerichtet ist, wenn sie das Weiterleiten einer von der Ansprech-Einheit erzeugten Nachricht an ein Zielsteuergerät sperrt, stellvertretend für das Zielsteuergerät zu antworten, wobei die Verwaltungs-Einheit eine eigene an die Ansprech-Einheit gerichtete Antwortnachricht erzeugt und dabei als Absendeadresse die Adresse des Zielsteuergeräts verwendet. Hierdurch lässt sich auf besonders effiziente Art und Weise der Betriebsablauf bei der Kommunikation zwischen Ansprech-Einheit und Steuergerät aufrechterhalten. Je nach Nachrichtentyp kann es erforderlich sein, dass die Ansprech-Einheit auf eine Antwort des Zielsteuergeräts wartet. Wenn die Verwaltungs-Einheit die entsprechende Nachricht jedoch nicht an das Zielsteuergerät weiterleitet, sondern sperrt, so bleibt die entsprechende Antwortnachricht aus und die Ansprech-Einheit würde unverhältnismäßig lange warten. Die Verwaltungs-Einheit kann jedoch selbst eine Antwortnachricht stellvertretend für das Zielsteuergerät generieren und an die Ansprech-Einheit versenden, um dies zu verhindern.

Bevorzugt ist der Verwaltungs-Einheit dabei dazu eingerichtet, Fehlerinformationen an die Antwortnachricht anzuhängen, wobei die Fehlerinformationen zumindest einen Hinweis auf wenigstens einen Betriebsmodus der Verwaltungs-Einheit enthalten. Situationsabhängig kann hierdurch das Betriebsverhalten der Ansprech-Einheit angepasst werden. Ist beispielsweise die Ansprech-Einheit zur Kommunikation mit den Steuergeräten autorisiert, hat jedoch den falschen Betriebsmodus verwendet, sodass eine relevante Nachricht von der Verwaltungs-Einheit gesperrt wird, so kann die Ansprech-Einheit daraufhin den passenden Betriebsmodus der Verwaltungs-Einheit aktivieren, wodurch das Weiterleiten der Nachrichten an die entsprechenden Steuergeräte erfolgen kann. Dies ist beispielsweise dann der Fall, wenn die Ansprech-Einheit zur Kommunikation mit einer gattungsgemäßen Verwaltungs-Einheit ohne Firewall-Funktionalität sowie zur Kommunikation mit einer erfindungsgemäßen Verwaltungs-Einheit verwendet wird. So kann die Ansprech-Einheit die Ausführung der Verwaltungs-Einheit abfragen und wird darüber informiert, welche Betriebsmodi vorhanden sind. Je nach Ausführung der Verwaltungs-Einheit können dabei auch ganz unterschiedliche Zusammensetzungen verschiedener Betriebsmodi vorgesehen sein. So kann eine erste Verwaltungs-Einheit eine erste Anzahl an Betriebsmodi aufweisen und eine zweite Verwaltungs-Einheit eine hierzu abweichende Anzahl Betriebsmodi. Entsprechend kann die Ansprech-Einheit für jede Verwaltungs-Einheit den zum Hindurchlassen der jeweiligen Nachricht passenden Betriebsmodus aktivieren.

Ein erfindungsgemäßes Fahrzeug umfasst wenigstens ein von einem im vorigen beschriebenen Kommunikationssystem umfasstes Steuergerät und eine von einem solchem Kommunikationssystem umfasste Verwaltungs-Einheit. Bei dem Fahrzeug kann es sich um ein beliebiges Fahrzeug wie einen Pkw, Lkw, Transporter, Bus oder dergleichen handeln. Durch das Umfassen entsprechender Bestandteile des erfindungsgemäßen Kommunikationssystems wird die Cybersicherheit des erfindungsgemäßen Fahrzeugs auf besonders einfache, effiziente und zuverlässige Art und Weise verbessert.

Weitere vorteilhafte Ausgestaltungen des erfindungsgemäßen Kommunikationssystems und des Fahrzeugs ergeben sich auch aus den Ausführungsbeispielen, welche nachfolgend unter Bezugnahme auf die Figuren näher beschrieben werden.

Dabei zeigen:
- Fig. 1: eine schematisierte Darstellung eines erfindungsgemäßen Fahrzeugs und eines erfindungsgemäßen Kommunikationssystems; und
- Fig. 2: zwei gemäß unterschiedlicher Betriebsmodi einer Verwaltungs-Einheit des Kommunikationssystems konfigurierte Entscheidungsbäume.

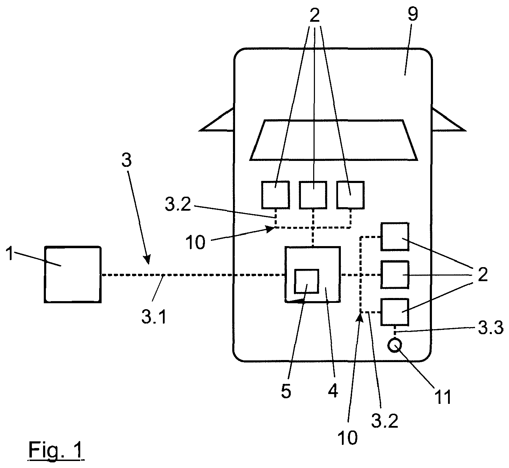

Figur 1 zeigt ein erfindungsgemäßes Fahrzeug 9. Das Fahrzeug 9 umfasst mehrere Steuergeräte 2, beispielsweise ein Motorsteuergerät, Getriebesteuergerät, ABS-Steuergerät, ein Steuergerät zum Ansteuern eines Kombiinstruments, eines Navigationssystems, eines Infotainmentsystems oder dergleichen. Die Steuergeräte 2 können über eine oder mehrere Bus-Leitungen 10, beispielsweise einen Highspeed-Bus und einen Lowspeed-Bus, an eine Verwaltungs-Einheit 4 angeschlossen sein. Bei der Verwaltungs-Einheit 4 kann es sich um eine dedizierte Recheneinheit handeln, oder aber um eine auf einer sonstigen Recheneinheit laufende Softwarekomponente. Die Verwaltungs-Einheit 4 wird auch als sogenanntes *Gateway* bezeichnet.

Die Steuergeräte 2 lassen sich über die Verwaltungs-Einheit 4 ansprechen, um Informationen auszulesen, ein Steuergerät 2 zur Bereitstellung eines Dienstes anzustoßen und/oder Softwarekomponenten der Steuergeräte 2 zu ändern oder neu einzubringen. Hierzu wird eine fahrzeugexterne Ansprech-Einheit 1 über eine Kommunikationsleitung 3 mit den entsprechenden Steuergeräten 2 verbunden. Der sich zwischen der Ansprech-Einheit 1 und der Verwaltungs-Einheit 4 befindliche Teil der Kommunikationsleitung 3 wird auch als Diagnosebus 3.1 bezeichnet und der sich zwischen der Verwaltungs-Einheit 4 und den Steuergeräten 2 befindliche Teil als Typ-Bus 3.2, wobei der "Typ" dabei für eine Kategorie der jeweils an den Typ-Bus 3.2 angeschlossenen Steuergeräte 2 steht, also beispielsweise ein Infotainment-Bus. Ferner können Sensoren 11 über einen Sub-Bus 3.3 an ein jeweiliges Steuergerät 2 angeschlossen sein.

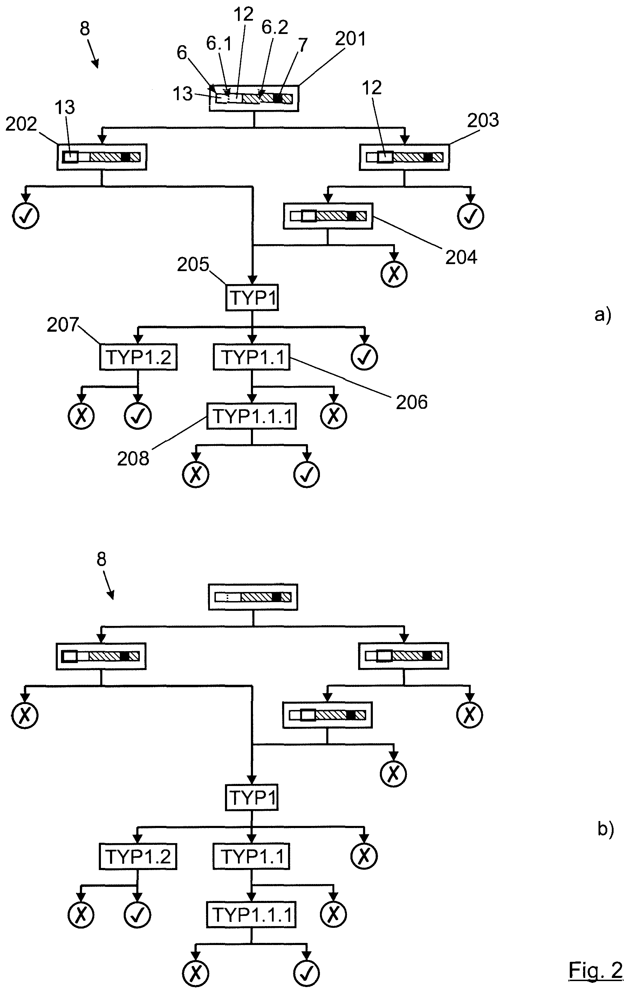

Zur Erhöhung der Cybersicherheit umfasst die Verwaltungs-Einheit 4 eine Firewall-Funktionalität 5 bzw. stellt diese bereit. Die Firewall-Funktionalität 5 kann durch eine auf der Verwaltungs-Einheit 4 ausgeführte Softwarekomponente bereitgestellt werden. Die Ansprech-Einheit 1 wird zum Ansprechen der jeweiligen Steuergeräte 2 verwendet. Dabei verwaltet die Verwaltungs-Einheit 4 die über die Kommunikationsleitung 3 erfolgende Kommunikation. Diese Kommunikation basiert gemäß einer vorteilhaften Ausführung des erfindungsgemäßen Kommunikationssystems auf dem durch die ISO 14229 definierten Unified-Diagnostic-Services Protokoll. Entsprechende Diagnosebotschaften werden dabei als in Figur 2 gezeigte Nachrichten 6 ausgetauscht. Die Verwaltungs-Einheit 4 entscheidet dann, welche dieser Nachrichten 6 an die jeweiligen Steuergeräte 2 hindurchgelassen werden sollen und welche dieser Nachrichten 6 blockiert werden sollen. Analog kann die Verwaltungs-Einheit 4 ferner von den Steuergeräten 2 ausgegebene Nachrichten 6 an die Ansprech-Einheit 1 hindurchlassen oder sperren.

Erfindungsgemäß weist die Verwaltungs-Einheit 4 wenigstens zwei Betriebsmodi auf, wobei in jedem Betriebsmodus eine unterschiedliche Gesamtheit unterschiedlicher Nachrichten 6 durchgelassen bzw. gesperrt werden. Das Aktivieren eines jeweiligen Betriebsmodus erfolgt dabei über eine an einer jeweiligen Nachricht 6 angehängte Betriebsmodus-Wahlinformation 7 (siehe Figur 2). Die Betriebsmodus-Wahlinformation 7 kann sowohl von der Ansprech-Einheit 1, als auch von einem Steuergerät 2 an einer entsprechenden Nachricht 6 angehängt werden, wodurch die Ansprech-Einheit 1 und die Steuergeräte 2 den Betriebsmodus der Verwaltungs-Einheit 4 ändern können.

Die einem jeweiligen Betriebsmodus zugrunde liegende Entscheidungslogik ist in Form eines Entscheidungsbaums 8 in Figur 2 für zwei unterschiedlich konfigurierte Betriebsmodi dargestellt. Figur 2a) zeigt dabei die Konfiguration gemäß eines ersten Betriebsmodus und Figur 2b) die Konfiguration gemäß eines zweiten Betriebsmodus. Ein eingekreistes Häkchen entspricht dabei dem Hindurchlassen von Nachrichten 6 und ein eingekreistes Kreuz dem Sperren bzw. Blockieren der Weiterleitung der Nachricht 6.

In einem ersten Schritt 201 analysiert die Verwaltungs-Einheit 4 die empfangene Nachricht 6. Die Nachricht 6 setzt sich dabei aus einem Kopf 6.1 und Nutzdaten 6.2 zusammen. Die Betriebsmodus-Wahlinformation 7 ist dabei, bevorzugt kryptografisch abgesichert, Bestandteil der Nutzdaten 6.2. Die Verwaltungs-Einheit 4 aktiviert den durch den Betriebsmodus-Wahlinformation 7 vorgegebenen Betriebsmodus. Gemäß des aktiven Betriebsmodus werden dann verschiedene Nachrichten 6 weitergeleitet oder blockiert. Hierzu könnend die Nachrichten 6 wie beispielsweise in den Schritten 202 und 203 angedeutet gemäß eines Adressteils 12 und eines Dienstteils 13 gruppiert werden. Der Dienstteil 13 beschreibt beispielsweise einen bestimmten Nachrichtentyp, also beispielsweise welcher Dienst mittels der jeweiligen Nachricht 6 von einem jeweiligen Steuergerät 2 bereitgestellt bzw. genutzt werden soll. Basiert das erfindungsgemäße Kommunikationssystem auf dem durch die ISO 14229 definierten UDS-Protokoll, kann es sich bei dem Dienstteil 13 beispielsweise um die sogenannte SID handeln. Dementsprechend können verschiedene SIDs vorgegeben sein, die von der Verwaltungs-Einheit 4 hindurchgelassen werden. Eine entsprechende Filterung kann basierend auf dem Adressteil 12 erfolgen, wobei der Adressteil 12 eine Quell- oder Zieladresse einer entsprechenden Hardwarekomponente des Kommunikationssystems entspricht. In dem in Figur 2 gezeigten Ausführungsbeispiel ist der Dienstteil 13 dem Adressteil 12 in der Nachricht 6 vorgelagert. Generell könnte die Anordnung von Dienstteil 13 und Adressteil 12 auch vertauscht sein.

Die Filterung der Nachrichten 6 kann anhand einer beliebigen Anzahl nachfolgender Stufen erfolgen. Nachrichten 6, die im Schritt 203 nicht einfach hindurchgelassen werden, können dann beispielsweise in einem folgenden Schritt 204 weiter geprüft werden. Eine erste Untermenge dieser Nachrichten 6 kann dann blockiert werden und eine weitere Untermenge, welche hier als TYP1 bezeichnet wird, im Schritt 205 weiter geprüft werden.

Diese Untermenge umfasst dann beispielsweise Nachrichten, die ganz bestimmte Dienste für ganz bestimmte Zieladressen vorsehen. Aus der Untermenge TYP1 können dann weitere Untermengen TYP1.1 und TYP1.2 in den Schritten 206 und 207 gebildet werden. Im Schritt 208 kann auch aus einer solchen Untermenge eine noch weitere Untermenge gebildet werden, welche hier als TYP1.1.1 bezeichnet wird.

Gemäß Figur 2b) ist ein anderer Betriebsmodus der Verwaltungs-Einheit 4 aktiv, sodass jeweils unterschiedliche Nachrichten 6 hindurchgelassen und gesperrt werden.

Das erfindungsgemäße Kommunikationssystem ist besonders einfach und damit kostengünstig auch in bestehende Fahrzeuge integrierbar. Es muss lediglich eine Komponente, nämlich besagte Verwaltungs-Einheit 4, angepasst werden. Das Kommunikationssystem ermöglicht somit bestehende Technologien wieder zu verwenden. Durch das Verwalten bzw. Filtern der über die Kommunikationsleitung 3 stattfindenden Kommunikation wird die Cybersicherheit verbessert. Der zuverlässige Zugriff auf die Steuergeräte 2 für autorisierte Nutzer ist dabei auf einfache Art und Weise sichergestellt. So können entsprechend autorisierte Nutzer schnell und einfach durch das Übertragen einer entsprechenden Nachricht 6, enthaltend eine entsprechende Betriebsmodus-Wahlinformation 7, die Verwaltungs-Einheit 4 so konfigurieren, dass der erforderliche Zugriff auf die Steuergeräte 2 erfolgen kann.

## Patentansprüche

1. Kommunikationssystem, umfassend eine fahrzeugexterne Ansprech-Einheit (1), wenigstens ein fahrzeuginternes Steuergerät (2) und eine in eine Kommunikationsleitung (3) zwischen die Ansprech-Einheit (1) und das wenigstens eine Steuergerät (2) zwischengeschaltete fahrzeuginterne Verwaltungs-Einheit (4), wobei die Verwaltungs-Einheit (4) eine Firewall-Funktionalität (5) zum selektiven Hindurchlassen oder Sperren von zwischen der Ansprech-Einheit und dem wenigstens einen Steuergerät austauschbaren Nachrichten (6) bereitstellt, wobei die Verwaltungs-Einheit (4) über wenigstens zwei Betriebsmodi verfügt, wobei in jedem Betriebsmodus eine unterschiedliche Gesamtheit hindurchzulassender und zu sperrender Nachrichten (6) vorgegeben ist, dadurch gekenzeichnet, dass die Verwaltungs-Einheit (4) dazu eingerichtet ist einen der Betriebsmodi in Abhängigkeit einer an eine Nachricht (6) von der Ansprech-Einheit (1) oder dem wenigstens einen Steuergerät (2) angehängten Betriebsmodus-Wahlinformation (7) zu aktivieren.

2. Kommunikationssystem nach Anspruch 1,
**dadurch gekennzeichnet, dass**
eine über die Kommunikationsleitung (3) erfolgende Kommunikation auf dem durch die ISO 14229 definierten UDS-Protokoll basiert.

3. Kommunikationssystem nach Anspruch 1 oder 2,
**dadurch gekennzeichnet, dass**
die Betriebsmodus-Wahlinformation (7) kryptografisch abgesichert an eine respektive Nachricht (6) angehängt ist.

4. Kommunikationssystem nach einem der Ansprüche 1 bis 3,
**dadurch gekennzeichnet, dass**
die Verwaltungs-Einheit (4) dazu eingerichtet ist automatisch einen ersten Betriebsmodus zu aktivieren, nach Erhalt einer eine Betriebsmodus-Wahlinformation (7) umfassenden Nachricht (6) den durch die Betriebsmodus-Wahlinformation (7) angegebenen Betriebsmodus zu aktivieren und nach Verarbeiten zumindest der Nachricht (6) automatisch erneut den ersten Betriebsmodus zu aktivieren.

5. Kommunikationssystem nach Anspruch 4,
**dadurch gekennzeichnet, dass**
im ersten Betriebsmodus das Weiterleiten von sämtlichen Nachrichten (6) gesperrt ist.

6. Kommunikationssystem nach einem der Ansprüche 1 bis 5,
**dadurch gekennzeichnet, dass**
die Verwaltungs-Einheit (4) über eine Überwachungsschnittstelle verfügt und dazu eingerichtet ist Betriebsinformationen über die Überwachungsschnittstelle bereitzustellen, wobei die Betriebsinformationen das Betriebsverhalten der Verwaltungs-Einheit (4) beschreiben.

7. Kommunikationssystem nach einem der Ansprüche 1 bis 6,
**dadurch gekennzeichnet, dass**
eine der Verwaltungs-Einheit (4) in Abhängigkeit eines jeweiligen Betriebsmodus zugrunde liegende Entscheidungslogik zum Entscheiden welche Nachrichten (6) gesperrt und hindurchgelassen werden sollen, in Form eines Entscheidungsbaums (8) definiert ist.

8. Kommunikationssystem nach einem der Ansprüche 1 bis 7,
**dadurch gekennzeichnet, dass**
die Verwaltungs-Einheit (4) dazu eingerichtet ist, wenn sie das Weiterleiten einer von der Ansprech-Einheit (1) erzeugten Nachricht (6) an ein Zielsteuergerät sperrt, stellvertretend für das Zielsteuergerät zu antworten, wobei die Verwaltungs-Einheit (4) eine eigene an die Ansprech-Einheit (1) gerichtete Antwortnachricht erzeugt und dabei als Absenderadresse die Adresse des Zielsteuergeräts verwendet.

9. Kommunikationssystem nach Anspruch 8,
**dadurch gekennzeichnet, dass**
die Verwaltungs-Einheit (4) dazu eingerichtet ist Fehlerinformationen an die Antwortnachricht anzuhängen, wobei die Fehlerinformationen zumindest einen Hinweis auf wenigstens einen Betriebsmodus der Verwaltungs-Einheit (4) enthalten.

10. Fahrzeug (9),
**gekennzeichnet durch**
wenigstens ein von einem Kommunikationssystem nach einem der Ansprüche 1 bis 9 umfasstes Steuergerät (2) und eine von dem Kommunikationssystem umfasste Verwaltungs-Einheit (4).

## Claims

1. Communication system, comprising an off-board response unit (1), at least one on-board control unit (2) and an on-board management unit (4) interposed in a communication line (3) between the response unit (1) and the at least one control unit (2), the management unit (4) providing a firewall functionality (5) for selectively letting through or blocking messages (6) that can be exchanged between the response unit and the at least one control unit,
the management unit (4) having at least two operating modes, in each operating mode a different set of messages (6) to be let through and blocked being specified, **characterized in that** the management unit (4) is configured to activate one of the operating modes depending on operating mode selection information (7) attached to a message (6) from the response unit (1) or the at least one control device (2).

2. Communication system according to claim 1,
**characterized in that**
communication via the communication line (3) is based on the UDS protocol defined by ISO 14229.

3. Communication system according to claim 1 or 2,
**characterized in that**
the operating mode selection information (7) is cryptographically secured and attached to a particular message (6).

4. Communication system according to any of claims 1 to 3,
**characterized in that**
the management unit (4) is configured to automatically activate a first operating mode, to activate the operating mode specified by the operating mode selection information (7) after receiving a message (6) comprising operating mode selection information (7), and to automatically reactivate the first operating mode after processing at least the message (6).

5. Communication system according to claim 4,
**characterized in that**
in the first operating mode, forwarding of all messages (6) is blocked.

6. Communication system according to any of claims 1 to 5,
**characterized in that**
the management unit (4) has a monitoring interface and is configured to provide operating information via the monitoring interface, the operating information describing the operating behavior of the management unit (4).

7. Communication system according to any of claims 1 to 6,
**characterized in that**
a decision logic, underlying the management unit (4) depending on a particular operating mode, for deciding which messages (6) should be blocked and which should be let through, is defined in the form of a decision tree (8).

8. Communication system according to any of claims 1 to 7,
**characterized in that**
the management unit (4) is configured, when it blocks the forwarding of a message (6) generated by the response unit (1) to a target control unit, to respond on behalf of the target control unit, the management unit (4) generating its own response message directed to the response unit (1) and using the address of the target control unit as the sender address.

9. Communication system according to claim 8,
**characterized in that**
the management unit (4) is configured to attach error information to the response message, the error information containing at least an indication of at least one operating mode of the management unit (4).

10. Vehicle (9),
**characterized by**
at least one control device (2) included in a communication system according to any of claims 1 to 9 and a management unit (4) included in the communication system.

## Revendications

1. Système de communication, comprenant une unité interactive (1) externe au véhicule, au moins un appareil de commande (2) interne au véhicule et une unité de gestion (4) interne au véhicule, intercalée dans une ligne de communication (3) entre l'unité interactive (1) et l'au moins un appareil de commande (2), dans lequel l'unité de gestion (4) met à disposition une fonctionnalité de pare-feu (5) pour laisser passer ou bloquer sélectivement des messages (6) échangeables entre l'unité interactive et l'au moins un appareil de commande, dans lequel
l'unité de gestion (4) dispose d'au moins deux modes de fonctionnement, dans lequel un ensemble différent de messages (6) à laisser passer et à bloquer est prédéfini dans chaque mode de fonctionnement, **caractérisé en ce que** l'unité de gestion (4) est conçue pour activer l'un des modes de fonctionnement en fonction d'une information de sélection de mode de fonctionnement (7) jointe à un message (6) provenant de l'unité interactive (1) ou de l'au moins un appareil de commande (2).

2. Système de communication selon la revendication 1,
**caractérisé en ce**
**qu'**une communication effectuée par l'intermédiaire de la ligne de communication (3) est basée sur le protocole UDS défini par la norme ISO 14229.

3. Système de communication selon la revendication 1 ou 2,
**caractérisé en ce que**
l'information de sélection de mode de fonctionnement (7) est jointe à un message (6) respectif de manière sécurisée sur le plan cryptographique.

4. Système de communication selon l'une des revendications 1 à 3,
**caractérisé en ce que**
l'unité de gestion (4) est conçue pour activer automatiquement un premier mode de fonctionnement, pour activer, après réception d'un message (6) comprenant une information de sélection de mode de fonctionnement (7), le mode de fonctionnement indiqué par l'information de sélection de mode de fonctionnement (7) et pour activer à nouveau automatiquement le premier mode de fonctionnement après traitement d'au moins le message (6).

5. Système de communication selon la revendication 4,
**caractérisé en ce que**
dans le premier mode de fonctionnement, le transfert de tous les messages (6) est bloqué.

6. Système de communication selon l'une des revendications 1 à 5,
**caractérisé en ce que**
l'unité de gestion (4) dispose d'une interface de surveillance et est conçue pour mettre à disposition des informations de fonctionnement par l'intermédiaire de l'interface de surveillance, dans lequel les informations de fonctionnement décrivent le comportement de fonctionnement de l'unité de gestion (4).

7. Système de communication selon l'une des revendications 1 à 6,
**caractérisé en ce**
**qu**'une logique de décision sous-jacente à l'unité de gestion (4) en fonction d'un mode de fonctionnement respectif pour la décision quels messages (6) doivent être bloqués et autorisés à passer est définie sous la forme d'un arbre de décision (8).

8. Système de communication selon l'une des revendications 1 à 7,
**caractérisé en ce que**
l'unité de gestion (4) est conçue, lorsqu'elle bloque le transfert d'un message (6) généré par l'unité interactive (1) à un appareil de commande cible, pour répondre à la place de l'appareil de commande cible, dans lequel l'unité de gestion (4) génère son propre message de réponse adressé à l'unité interactive (1) et utilise alors comme adresse d'expéditeur l'adresse de l'appareil de commande cible.

9. Système de communication selon la revendication 8,
**caractérisé en ce que**
l'unité de gestion (4) est conçue pour joindre des informations d'erreur au message de réponse, dans lequel les informations d'erreur contiennent au moins une indication d'au moins un mode de fonctionnement de l'unité de gestion (4).

10. Véhicule (9),
**caractérisé par**
au moins un appareil de commande (2) compris dans un système de communication selon l'une des revendications 1 à 9 et une unité de gestion (4) comprise dans le système de communication.
